(19) Europäisches Patentamt / European Patent Office / Office européen des brevets

(11) **EP 4 238 946 A1**

(12) **EUROPEAN PATENT APPLICATION**
published in accordance with Art. 153(4) EPC

(43) Date of publication:
06.09.2023 Bulletin 2023/36

(21) Application number: 21886207.6

(22) Date of filing: 26.10.2021

(51) International Patent Classification (IPC):
*C03C 25/1065* (2018.01)      *C03C 25/285* (2018.01)
*C03C 25/50* (2006.01)      *C03C 25/6226* (2018.01)
*G02B 6/02* (2006.01)      *G02B 6/44* (2006.01)

(52) Cooperative Patent Classification (CPC):
C03C 25/1065; C03C 25/285; C03C 25/50;
C03C 25/6226; G02B 6/02; G02B 6/44

(86) International application number:
PCT/JP2021/039503

(87) International publication number:
WO 2022/092089 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.10.2020 JP 2020181724

(71) Applicant: FURUKAWA ELECTRIC CO., LTD.
Chiyoda-ku
Tokyo 100-8322 (JP)

(72) Inventors:
• ISHIZUKI, Kuniaki
  Tokyo 100-8322 (JP)
• KASAHARA, Minoru
  Tokyo 100-8322 (JP)
• IWAYA, Mitsuhiro
  Tokyo 100-8322 (JP)

(74) Representative: Leinweber & Zimmermann
Patentanwalts-PartG mbB
European Patent Attorneys
Viktualienmarkt 8
80331 München (DE)

(54) **COLORED OPTICAL FIBER CORE WIRE, OPTICAL FIBER RIBBON, SINGLE-CORE FIBER ASSEMBLY CABLE, RIBBON CABLE, AND METHOD FOR PRODUCING SAME**

(57) Provided is a colored optical fiber of which a primary layer is easily formed. The colored optical fiber includes a bare optical fiber, a primary layer formed of an ultraviolet curing resin covering the bare optical fiber, and a secondary layer formed of an ultraviolet curing resin covering the primary layer. Young's modulus of the primary layer is smaller than 70% with respect to a saturated Young's modulus of the primary layer. The saturated Young's modulus of the primary layer is larger than or equal to 0.84 MPa.

FIG. 1

Processed by Luminess, 75001 PARIS (FR)

**Description**

[Technical Field]

The present invention relates to a colored optical fiber, an optical fiber ribbon, an assembly cable of single fibers, a ribbon cable and a method for manufacturing the same.

[Background Art]

In a colored optical fiber, a technique in which a primary layer covering a bare optical fiber, a secondary layer covering the primary layer, and a colored layer covering the secondary layer are set to a desired Young's modulus respectively by an ultraviolet curing resin (Patent Literature 1, 2) is known. For example, the Young's modulus of the primary layer is set to be small, and the primary layer absorbs an external force applied to the bare optical fiber, thereby suppressing a transmission loss of light due to small deformation of the bare optical fiber (microbend loss). The Young's modulus of the secondary layer is set to be larger than the Young's modulus of the primary layer, and the secondary layer protects the bare optical fiber and the primary layer from external force.

Since it is desirable that the Young's modulus of the primary layer be low, a technique described in Patent Literature 3, 4 uses an ultraviolet curing resin having a low saturated Young's modulus as the primary layer, and the primary layer is ultraviolet-cured until the Young's modulus approaches the saturated Young's modulus.

[Citation List]

[Patent Literature]

Patent Literature 1: Japanese Patent Application Laid-open No. 2005-162522
Patent Literature 2: National Publication of International Patent Application No, 2002-524581
Patent Literature 3: International Publication No. 2018-062364
Patent Literature 4: International Publication No. 2018-062365

[Summary of Invention]

[Technical Problem]

However, an ultraviolet curing resin having small saturated Young's modulus has high viscosity, and therefore, it is difficult to handle the ultraviolet curing resin. Further, in a drawing step, the ultraviolet curing resin is exposed to high temperature, so that a reaction of curing is suppressed and the Young's modulus becomes too small.

In view of the above problems, the present invention intends to effectively suppress microbend loss while avoiding problems associated with the ultraviolet curing resin having small saturated Young's modulus.

[Solution to Problem]

According to an aspect of the present invention, there is provided a colored optical fiber including a bare optical fiber, a primary layer formed of an ultraviolet curing resin covering the bare optical fiber, and a secondary layer formed of an ultraviolet curing resin covering the primary layer. A Young's modulus of the primary layer is smaller than 70% with respect to a saturated Young's modulus of the primary layer. The saturated Young's modulus of the primary layer is larger than or equal to 0.84 MPa.

According to another aspect of the present invention, there is provided a method for manufacturing a colored optical fiber including a step of drawing a bare optical fiber from an optical fiber base material, a step of forming a primary layer by applying an ultraviolet curing resin around the bare optical fiber, and a step of forming a secondary layer by applying an ultraviolet curing resin around the primary layer and irradiating the ultraviolet curing resin with ultraviolet light. After manufacturing the colored optical fiber, a Young's modulus of the primary layer is smaller than 70% with respect to a saturated Young's modulus of the primary layer, and the saturated Young's modulus of the primary layer is larger than or equal to 0.84 MPa.

[Advantageous Effects of Invention]

According to the present invention, it is possible to suppress microbend loss while avoiding problems associated with the ultraviolet curing resin having small saturated Young's modulus.

[Brief Description of drawings]

[FIG. 1] FIG. 1 is a cross-sectional view of a colored optical fiber according to a first embodiment.
[FIG. 2] FIG. 2 is a schematic diagram of a manufacturing apparatus used in a method for manufacturing the colored optical fiber according to the first embodiment.
[FIG. 3] FIG. 3 is a flowchart of the method for manufacturing the colored optical fiber according to the first embodiment.
[FIG. 4] FIG. 4 is a cross-sectional view of an optical fiber ribbon according to a second embodiment.
[FIG. 5] FIG. 5 is a schematic diagram of a ribbon forming apparatus used in the method for manufacturing an optical fiber ribbon according to the second embodiment.
[FIG. 6] FIG. 6 is a flowchart of the method for manufacturing the optical fiber ribbon according to the second embodiment.
[FIG. 7] FIG. 7 is a diagram illustrating a microbend loss according to Examples and Comparative Examples.

[Description of Embodiments]

Embodiments according to the present invention will be described below with reference to the drawings. Throughout the drawings, components having the same function are labeled with same references, and the description thereof may be omitted or simplified.

[First Embodiment]

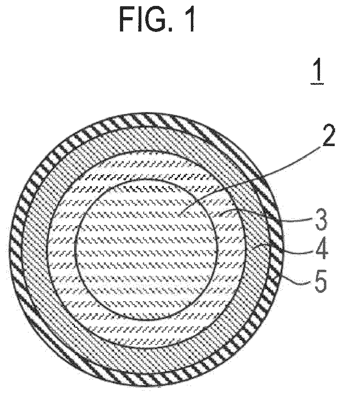

FIG. 1 is a cross-sectional view of a colored optical fiber 1 according to a first embodiment. The colored optical fiber 1 includes a bare optical fiber 2, a primary layer 3 covering the outer periphery of the bare optical fiber 2, a secondary layer 4 covering the outer periphery of the primary layer 3, and a colored layer 5 covering the outer periphery of the secondary layer 4. The bare optical fiber 2 is covered with three covering layers of a primary layer 3, a secondary layer 4, and a colored layer 5.

The bare optical fiber 2 is formed of quartz glass or the like, for example, and transmits light. The primary layer 3, the secondary layer 4, and the colored layer 5 are formed by curing an ultraviolet curing resin by irradiation with ultraviolet light. The ultraviolet curing resin is not particularly limited as long as it can be polymerized by irradiation with ultraviolet light. The ultraviolet curing resin may be a resin that can be polymerized by photoradical polymerization or the like, for example. The ultraviolet curing resin may be an ultraviolet curing resin having a polymerizable unsaturated group such as an ethylenic unsaturated group polymerized and cured by ultraviolet light such as urethane (meth)acrylates such as polyether-based urethane (meth)acrylates and polyester-based urethane (meth)acrylates, epoxy (meth)acrylates, polyester (meth)acrylates, or the like, for example, and it is preferable that the resin have at least two polymerizable unsaturated groups. A polymerizable unsaturated group in the ultraviolet curing resin may be, for example, a group having an unsaturated double bond such as a vinyl group, an allyl group, an acryloyl group, a methacryloyl group, or the like, a group having an unsaturated triple bond such as a propargyl group, or the like. The acryloyl group and the methacryloyl group are preferable out of the groups described above in terms of polymerizability. The ultraviolet curing resin may be a monomer, an oligomer, or a polymer that initiates polymerization by ultraviolet irradiation to be cured and preferably is an oligomer. Note that the oligomer is a polymer having a degree of polymerization of 2 to 100. Further, in the present specification, the term "(meth)acrylates" means one or both of acrylates and methacrylates.

Polyether-based urethane (meth)acrylate is a compound having a polyether segment, (meth)acrylate, and a urethane bond as with a product in a reaction of polyol having a polyether framework with an organic polyisocyanate compound and hydroxyalkyl (meth)acrylate. Further, polyester-based urethane (meth)acrylate is a compound having a polyester segment, (meth)acrylate, and a urethane bond as with a product in a reaction of polyol having a polyester framework with an organic polyisocyanate compound and hydroxyalkyl (meth)acrylate.

Further, the ultraviolet curing resin may include, for example, a diluent monomer, a photosensitizer, a chain transfer agent, and various additives in addition to an oligomer and a photopolymerization initiator. As a diluent monomer, monofunctional (meth)acrylate, or polyfunctional (meth)acrylate is used. The diluent monomer here means a monomer used for diluting an ultraviolet curing resin.

The primary layer 3 is a soft layer having a Young's modulus larger than or equal to 0.1 MPa and smaller than or equal to 5 MPa, and has a function of buffering an external force applied to the bare optical fiber 2. When the maximum Young's modulus that the resin can express is defined as "saturated Young's modulus", the primary layer 3 preferably has Young's modulus smaller than 70% with respect to the saturated Young's modulus, and the saturated Young's modulus of the primary layer 3 is preferably larger than or equal to 0.84 MPa. The secondary layer 4 is preferably a hard layer having Young's modulus of larger than or equal to 500 MPa, and has a function of protecting the bare optical fiber 2 and the primary layer 3 from external force. The colored layer 5 is colored to identify the colored optical fiber 1.

The colored optical fiber 1 is not limited to the configuration illustrated in FIG. 1. For example, the bare optical fiber 2 may be covered with four or more layers. Instead of the colored optical fiber 1, an optical fiber without the colored layer 5 may be used. Further, instead of covering the secondary layer 4 with the colored layer 5, the secondary layer 4 may be colored.

The diameter of the bare optical fiber 2 may be larger than or equal to 80 $\mu$m and smaller than or equal to 150 $\mu$m, preferably larger than or equal to 124 $\mu$m and smaller than or equal to 126 $\mu$m. The thickness of the primary layer 3 may be larger than or equal to 5 $\mu$m and smaller than or equal to 60 $\mu$m. The thickness of the secondary layer 4 may be larger than or equal to 5 um and smaller than or equal to 60 $\mu$m. The thickness of the colored layer 5 may be about several micrometers.

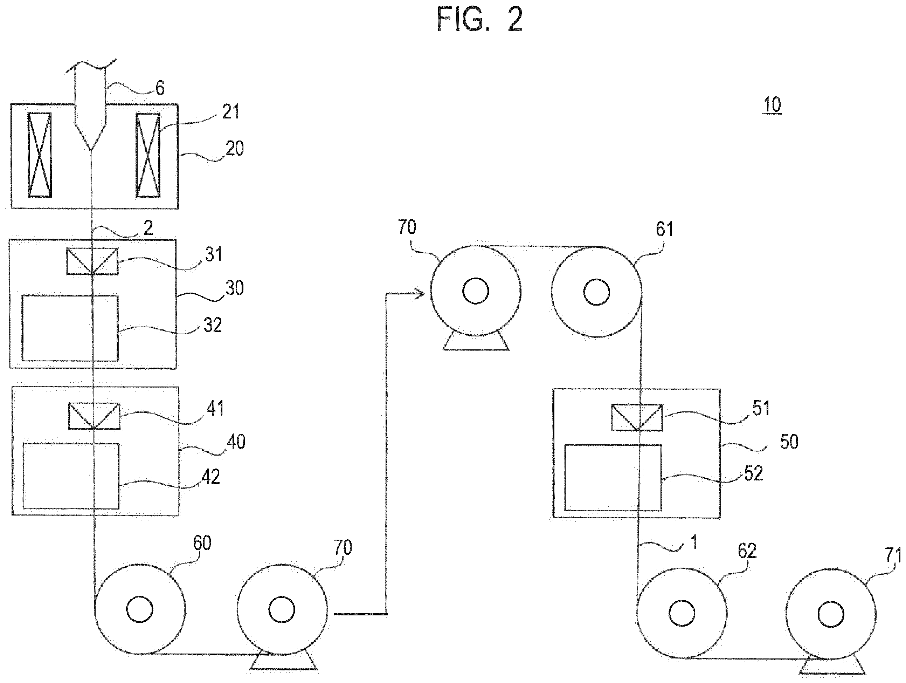

FIG. 2 is a schematic diagram of a manufacturing apparatus 10 used in a method for manufacturing the colored optical fiber 1 according to the first embodiment. The manufacturing apparatus 10 includes a heating apparatus 20, a primary layer covering apparatus 30, a secondary layer covering apparatus 40, a colored layer covering apparatus 50, guide rollers 60, 61 and 62, a bobbin 70 and a winding apparatus 71. The manufacturing apparatus 10 is an apparatus for manufacturing the colored optical fiber 1 from the optical fiber base material 6. The optical fiber base material 6 is made of quartz glass, for example, and is manufactured by a known method such as a VAD method, an OVD method, or an MCVD method. The heating apparatus 20 includes a heater 21. The heater 21 may be any heat source such as a tape heater, a ribbon heater, a rubber heater, an oven heater, a ceramic heater, a halogen heater, or the like. The end of the optical fiber base material 6 is heated and melted by using the heater 21 arranged around the optical fiber base material 6, and a bare optical fiber 2 is drawn by drawing.

Under the heating apparatus 20, a primary layer covering apparatus 30 is provided. The primary layer covering apparatus 30 includes a resin application apparatus 31 and an ultraviolet irradiation apparatus 32. The resin application apparatus 31 holds a covering material of the primary layer 3 (also referred to as a primary layer material). The primary layer material is applied to the bare optical fiber 2 drawn from the optical fiber base material 6 by the resin application apparatus 31. The ultraviolet irradiation apparatus 32 is provided under the resin application apparatus 31. The ultraviolet irradiation apparatus 32 includes any ultraviolet light source such as a metal halide lamp, a mercury lamp, or an UV-LED. The primary layer material is applied to the bare optical fiber 2 by the resin application apparatus 31 and the bare optical fiber 2 enters the ultraviolet irradiation apparatus 32, and the primary layer material is irradiated with ultraviolet light. As a result, the primary layer material containing the ultraviolet curing resin as a main component is cured to form the primary layer 3.

Under the primary layer covering apparatus 30, the secondary layer covering apparatus 40 is provided. The secondary layer covering apparatus 40 includes a resin application apparatus 41 and an ultraviolet irradiation apparatus 42. The resin application apparatus 41 holds a covering material of the secondary layer 4 (also referred to as a secondary layer material). The secondary layer material is applied to the primary layer 3 by the resin application apparatus 41. The ultraviolet irradiation apparatus 42 is provided under the resin application apparatus 41. The ultraviolet irradiation apparatus 42 may have a configuration similar to that of the ultraviolet irradiation apparatus 32. The bare optical fiber 2 enters the ultraviolet irradiation apparatus 42, and the secondary layer material is irradiated with ultraviolet light. As a result, the secondary layer material containing the ultraviolet curing resin as a main component is cured to form the secondary layer 4. After the primary layer 3 and the secondary layer 4 are formed, the bare optical fiber 2 is guided by the guide roller 60 provided under the secondary layer covering apparatus 40, and wound around the bobbin 70. After the primary layer 3 and the secondary layer 4 are formed, the bare optical fiber 2 covered with the primary layer 3 and the secondary layer 4 is wound around the bobbin once, and then the colored layer 5 is formed.

The resin application apparatus 31 may be configured to hold the primary layer material and the secondary layer material separately. In this case, the resin application apparatus 31 applies the primary layer material to the bare optical fiber 2, and subsequently applies the secondary layer material to the primary layer material. The ultraviolet irradiation apparatus 32 irradiates the primary layer material and the secondary layer material applied to the bare optical fiber 2 with ultraviolet light to form the primary layer 3 and the secondary layer 4. In this case, the manufacturing apparatus 10 does not necessarily need to include the secondary layer covering apparatus 40.

The bare optical fiber 2 wound around the bobbin 70 is guided by the guide roller 61 and enters the colored layer covering apparatus 50. The colored layer covering apparatus 50 includes a resin application apparatus 51 and an ultraviolet irradiation apparatus 52. The resin application apparatus 51 holds a covering material of the colored layer 5 (also referred to as a coloring layer material). The bare optical fiber 2 covered with the primary layer 3 and the secondary layer 4 is covered with the colored layer material by the resin application apparatus 51. The ultraviolet irradiation apparatus 52 is provided under the resin application apparatus 51. The ultraviolet irradiation apparatus 52 may be configured similarly to the ultraviolet irradiation apparatus 32 and 42. The bare optical fiber 2 covered with the colored layer material on the outer periphery of the secondary layer 4 enters the ultraviolet irradiation apparatus 52, and the bare optical fiber 2 is irradiated with ultraviolet light. As a result, the colored layer material containing the ultraviolet curing resin as a main component is cured to form the colored layer 5. The primary layer 3, the secondary layer 4, and the colored layer 5 are covered with the bare optical fiber 2 to form a colored optical fiber 1. The colored optical fiber 1 is guided by the guide roller 62 provided under the colored layer covering apparatus 50 and wound by the winding apparatus 71.

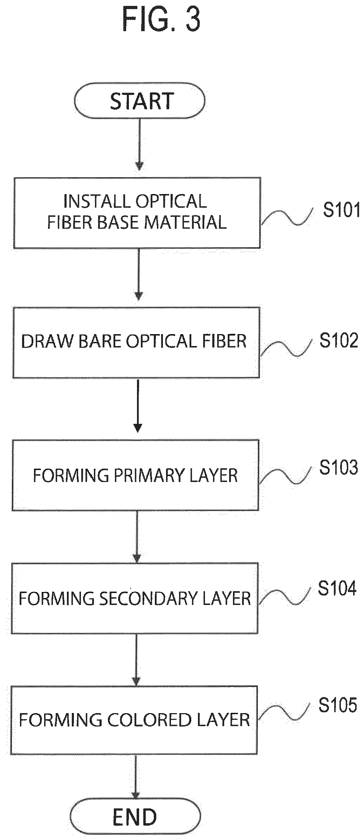

FIG. 3 is a flowchart of a method for manufacturing the colored optical fiber 1 according to the first embodiment. First, a user installs the optical fiber base material 6 in the manufacturing apparatus 10 (step S101). Next, the heater 21 provided in the heating apparatus 20 heats the optical fiber base material 6 and starts drawing the bare optical fiber 2 (step S102).

The primary layer covering apparatus 30 forms the primary layer 3 by applying a primary layer material containing an ultraviolet curing resin around the drawn bare optical fiber 2, and irradiating the primary layer material with ultraviolet light to form the primary layer 3 (step S103). Next, the secondary layer covering apparatus 40 forms the secondary layer 4 by applying a secondary layer material containing an ultraviolet curing resin around the primary layer 3, and irradiating the secondary layer material with ultraviolet light (step S104). Subsequently, the colored layer covering apparatus 50 forms the colored layer 5 by applying a colored layer material containing an ultraviolet curing resin around the secondary layer 4, and irradiating the colored layer material with ultraviolet light (step S105). Thus, a colored optical fiber 1 is obtained. In the step of forming the primary layer (step S103), it is not always necessary to irradiate ultraviolet light. In this case, the primary layer 3 can be cured by irradiation with ultraviolet light in the step of forming the secondary layer 4 (step S104).

In the manufacturing process of the colored optical fiber 1, the ultraviolet light irradiation is performed in the step of forming the primary layer 3 (step S103), the step of forming the secondary layer 4 (step S104), and the step of forming the colored layer 5 (step S105). Accordingly, after the primary layer 3 is formed, the primary layer 3 is irradiated with ultraviolet light even in the forming of the secondary layer 4 and the colored layer 5, and the primary layer 3 can be cured. More specifically, ultraviolet light transmitted through the secondary layer 4 and the colored layer 5 is absorbed by the primary layer 3, and curing of the primary layer 3 can proceed further. If the ultraviolet curing resin is too cured, the Young's modulus of the primary layer 3 becomes large, and it may be difficult for the primary layer 3 to sufficiently buffer the external force applied to the bare optical fiber 2. This may result in microbend loss.

In the present embodiment, while the Young's modulus of the primary layer 3 is smaller than the saturated Young's modulus, curing of the primary layer 3 is suppressed and microbend loss is effectively avoided. A method for suppressing curing of the primary layer 3 will be described below. The primary layer 3 is cured by polymerization of the ultraviolet curing resin contained in the primary layer material. The low molecular weight component contained in the primary layer material is partly volatilized, for example, under high temperature conditions after the drawing step (step S102). By irradiating the primary layer material with ultraviolet light while the primary layer material is at high temperature, polymerization and volatilization of the primary layer material proceed simultaneously. The polymerization and volatilization of the primary layer material proceed simultaneously, thereby suppressing the polymerization of the primary layer material. That is, by irradiating the primary layer material with ultraviolet light under the condition that the primary layer material is at a high temperature, progress of curing of the primary layer 3 can be suppressed, and the Young's modulus of the primary layer 3 can be kept small. At this time, the composition of the primary layer material is changed by volatilization of the primary layer material, and curing of the primary layer 3 is suppressed. In other words, the composition of the primary layer 3 is changed so as to suppress progress of curing. That is, curing of the primary layer 3 can be suppressed even when the colored optical fiber 1 is irradiated with additional ultraviolet light. The method for increasing the temperature of the primary layer material includes, for example, shortening the period from the end of the drawing step (step S102) to the start of the step of covering the primary layer 3 (step S103). In this case, since the primary layer material is applied around the bare optical fiber 2 at a relatively high temperature, the primary layer material can be irradiated with ultraviolet light in a state where the primary layer material is at a high temperature.

The method for suppressing the progress of curing of the primary layer 3 is not limited to a method for increasing the temperature of the primary layer material. Other methods include, for example, a method for adjusting the amount of additives contained in the primary layer material, and a method for adjusting the amount of ultraviolet light to be irradiated. By arbitrarily selecting or combining these methods, the method can be appropriately set so that the primary layer 3 having the required Young's modulus can be obtained.

In the present embodiment, the ultraviolet curing resin used for the primary layer material desirably has a saturated Young's modulus larger than or equal to 0.84 MPa. The viscosity of the ultraviolet curing resin having a large saturated Young's modulus is lower than the viscosity of the ultraviolet curing resin having a small saturated Young's modulus. Therefore, for example, the primary layer material can be uniformly applied to the outer periphery of the bare optical fiber 2, and the primary layer can be easily formed.

[Second Embodiment]

An optical fiber ribbon, an apparatus for manufacturing an optical fiber ribbon, and a manufacturing method thereof according to a second embodiment of the present invention will be described. Components similar to those of the colored optical fiber 1, the manufacturing apparatus 10 and the manufacturing method for the colored optical fiber 1 according to the first embodiment are denoted by the same reference numerals, and description thereof will be omitted or simplified.

In the present embodiment, as an example of a cable to which the colored optical fiber 1 according to the first embodiment is applied, an optical fiber ribbon composed of the colored optical fiber 1 according to the first embodiment will be described. An example of the application of the colored optical fiber according to the first embodiment is not limited to the form of an optical fiber ribbon, and may be, for example, a form of an assembly cable of single fibers in which the colored optical fiber is accommodated by a sheath.

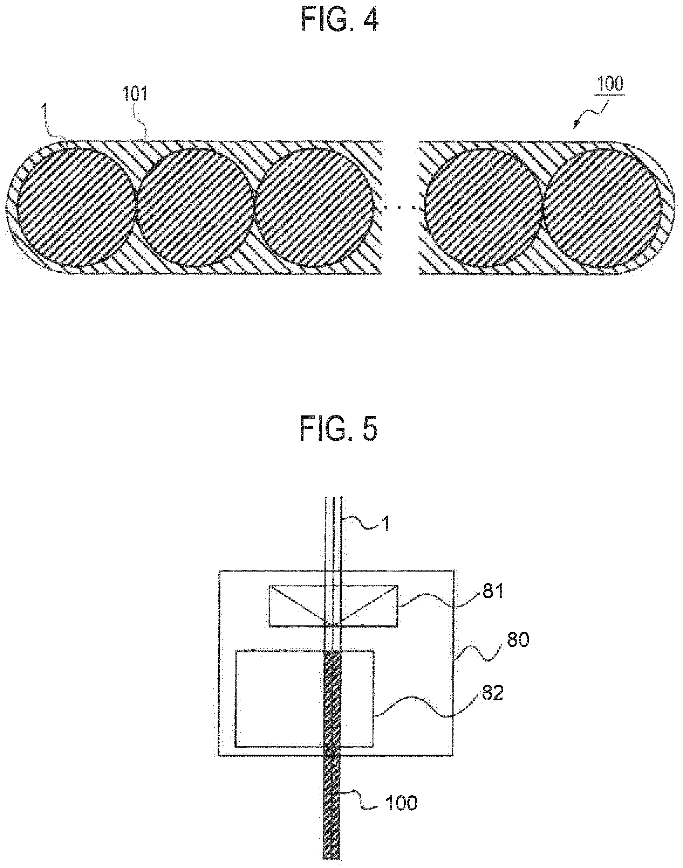

FIG. 4 is a cross-sectional view of an optical fiber ribbon 100 according to a second embodiment. The optical fiber ribbon 100 is formed by bundling a plurality of colored optical fibers 1 in a band shape via an adhesive layer 101. The adhesive layer 101 is formed by irradiating a covering material containing an ultraviolet curing resin with ultraviolet light to be cured. The ultraviolet curing resin forming the adhesive layer 101 is made of a resin similar to the ultraviolet curing resin forming the primary layer 3, the secondary layer 4, and the colored layer 5. The colored optical fiber 1 can be bundled in high density by taking the form of an optical fiber ribbon 100. The optical fiber ribbon 100 is not limited to the configuration illustrated in FIG. 4. Further, the optical fiber ribbon 100 may take the form of a ribbon cable accommodated by a sheath, and the colored optical 1 may take an intermittent adhesive structure in which the colored optical fiber 1 is intermittently bonded in the longitudinal direction.

FIG. 5 is a schematic diagram of a ribbon forming apparatus 80 used in a method for manufacturing the optical fiber ribbon 100 according to the second embodiment. The ribbon forming apparatus 80 holds a covering material of the adhesive layer 101 (also referred to as an adhesive layer material). The ribbon forming apparatus 80 is provided with an ultraviolet light source similar to the ultraviolet light sources provided in the ultraviolet irradiation apparatuses 32, 42, and 52. A plurality of prepared colored optical fibers 1 enter the ribbon forming apparatus 80, and the adhesive layer material is applied thereto. The colored optical fiber 1 applied to the adhesive layer material is bundled together with a plurality of other colored optical fibers 1 applied to the adhesive layer material. The bundled plurality of colored optical fibers 1 are irradiated with ultraviolet light by an ultraviolet light source provided in the ribbon forming apparatus 80. As a result, the adhesive layer material containing the ultraviolet curing resin as a main component is cured to form the adhesive layer 101. A plurality of colored optical fibers 1 arranged in parallel are connected via the adhesive layer 101. In this way, the optical fiber ribbon 100 is formed from the colored optical fiber 1.

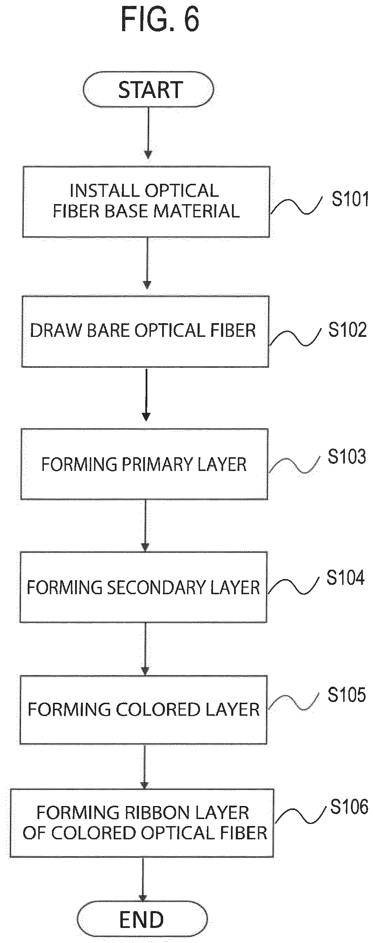

FIG. 6 is a flowchart of the method for manufacturing the optical fiber ribbon 100 according to the second embodiment. Steps S101 to S105 are similar to those in the first embodiment. In the flowchart of FIG. 6, in addition to the flowchart of the first embodiment, a ribbon forming step of the colored optical fiber 1 is performed. That is, after the colored layer 5 is formed in step S105, the ribbon forming apparatus 80 applies an ultraviolet curing resin to a plurality of prepared colored optical fibers 1, and irradiates the ultraviolet curing resin with ultraviolet light to connect the plurality of colored optical fibers 1 (step S106). Thus, the optical fiber ribbon 100 is manufactured.

In the process of manufacturing the optical fiber ribbon 100 from the colored optical fiber 1, the colored optical fiber 1 is irradiated with ultraviolet light. Further, the colored optical fiber 1 can suppress curing of the primary layer 3 even when additional ultraviolet irradiation is performed after manufacturing. Therefore, even in the ribbon forming step of the colored optical fiber, curing of the primary layer 3 due to irradiation with ultraviolet light can be suppressed. Therefore, it is possible to obtain the optical fiber ribbon 100 in which an increase in microbend loss in the ribbon forming step is suppressed.

[Examples]

Hereinafter, experimental results of a colored optical fiber colored and an optical fiber ribbon according to an embodiment of the present invention will be described.

Table 1

| | Saturated Young's modulus (MPa) | Young's modulus (MPa) | Young's modulus/ saturated Young's modulus (%) | Young's modulus after additional ultraviolet irradiation (MPa) | Young's modulus after additional ultraviolet irradiation/saturated Young's modulus (%) | Change amount of Young' modulus/ saturated Young's modulus (%) | Evaluation 1 | Evaluation 2 |
|---|---|---|---|---|---|---|---|---|
| Example 1 | 0.84 | 0.58 | 68.7 | 0.59 | 69.9 | 1.2 | OK | OK |
| Example 2 | 0.84 | 0.54 | 63.9 | 0.54 | 64.0 | 0.0 | OK | OK |
| Example 3 | 1.30 | 0.39 | 30.3 | 0.43 | 32.7 | 3.1 | OK | OK |
| Example 4 | 1.30 | 0.30 | 23.1 | 0.33 | 25.4 | 2.3 | OK | OK |
| Example 5 | 1.30 | 0.70 | 53.8 | 0.90 | 69.2 | 15.4 | OK | OK |
| Example 6 | 1.74 | 1.11 | 63.6 | 1.12 | 64.1 | 0.6 | OK | OK |
| Example 7 | 1.74 | 0.82 | 47.0 | 0.89 | 50.9 | 4.0 | OK | OK |
| Example 8 | 2.60 | 0.90 | 34.5 | 1.04 | 40.0 | 5.4 | OK | OK |
| Example 9 | 2.60 | 0.71 | 27.4 | 1.00 | 38.3 | 11.2 | OK | OK |
| Comparative Example 1 | 1.30 | 0.19 | 14.4 | 1.27 | 97.7 | 83.1 | OK | NG |
| Comparative Example 2 | 1.30 | 0.95 | 73.3 | 1.29 | 99.1 | 26.2 | NG | NG |

Table 1 illustrates Young's modulus of the primary layer and evaluations of the microbend loss in Examples and Comparative Examples of the colored optical fiber or the optical fiber ribbon. That is, Table 1 illustrates saturated Young's modulus (MPa), Young's modulus (MPa), Young's modulus/saturated Young's modulus (%), Young's modulus after additional ultraviolet irradiation (MPa), Young's modulus after additional ultraviolet irradiation/saturated Young's modulus (%), the amount of change in Young's modulus /saturated Young's modulus (%), and evaluations of the microbend loss of the primary layer 3 in Examples 1 to 9 and Comparative Examples 1 and 2.

The "saturated Young's modulus" in Table 1 is the Young's modulus when an ultraviolet curing resin forming the primary layer 3 is formed and irradiated with ultraviolet light at room temperature using a mercury lamp, UV-LED, or the like to be completely cured. The "Young's modulus" in Table 1 is ISM (In Situ Modulus) of the primary layer 3 of the colored optical fiber 1. In the present specification, ISM is defined as measured by the following method.

First, using a commercially available stripper, the primary layer 3 and the secondary layer 4 of the intermediate portion of the optical fiber serving as a sample are peeled off by a length of several millimeters, and then a load F is applied to one end of the optical fiber on which the covering layer is formed. In this state, a displacement δ of the primary layer 3 at the boundary between the portion where the covering layer is peeled off and the portion where the covering layer is formed is read by a microscope. Then, by setting the load F to 10, 20, 30, 50, and 70 gf (that is, 98, 196, 294, 490, and 686 mN sequentially), a graph of the displacement δ with respect to the load F is created. Then, the primary elastic modulus is calculated using the slope obtained from the graph and the following equation (1). Since the calculated primary elastic modulus corresponds to the so-called ISM, the primary elastic modulus is appropriately referred to as P-ISM in the following description.

[Math 1]

$$P - ISM = (3F/\delta) * (1/2\pi l) * \ln(DP/DG) \cdots \text{(equation (1))}$$

Here, the unit of P-ISM is [MPa]. Further, F/δ is an inclination indicated by a graph of the displacement (δ) [μm] with respect to the load (F) [gf], 1 is a sample length (for example, 10 mm), and DP/DG is a ratio between the outer diameter (DP) [um] of the primary layer 3 and the outer diameter (DG) [μm] of the cladding portion of the optical fiber. Therefore, in the case of calculating P-ISM from F, δ, and 1 used, it is necessary to perform predetermined unit conversion. The outer diameter of the primary layer 3 and the outer diameter of the cladding portion can be measured by observing the cross section of the optical fiber cut by the fiber cutter with a microscope.

The "Young's modulus after additional ultraviolet irradiation" in Table 1 is the ISM of the primary layer 3 when the manufactured colored optical fiber 1 was additionally irradiated with ultraviolet light at 1000 mW/cm2 and 500 mJ/cm2 using D bulb. Further, "change amount of Young's modulus/saturated Young's modulus" represents a ratio between a change amount of Young's modulus before and after the additional irradiation with ultraviolet light and the saturated Young's modulus. The "change amount of Young's modulus" is a value of a change amount from the "Young's modulus" to the "Young's modulus after additional ultraviolet irradiation".

"Evaluation 1" in Table 1 indicates whether or not the microbend loss in the colored optical fiber 1 before additional irradiation with ultraviolet light meets the standard (smaller than or equal to 0.15 dB/km). "Evaluation 2" represents whether or not the microbend loss in the colored optical fiber 1 after additional irradiation with ultraviolet light meets the standard (smaller than or equal to 0.15 dB/km). When the microbend loss meets the standard, the Evaluations 1 and 2 are defined to be good (OK), and when the microbend loss does not meet the standard, the evaluations 1 and 2 are defined to be poor (NG).

There are various methods of measuring microbend loss. In the present specification, a difference between a transmission loss of an optical fiber to be measured in a state A in which optical fibers having a length of greater than or equal to 400 m are wound around a large bobbin wound a sandpaper #1000 thereon in one layer so as not to overlap each other with a tension of 100 gf, and a transmission loss of an optical fiber in state B wound on the same bobbin as state A with the same tension and length as state A which is not wound around a sandpaper, is defined as a microbend loss value. Here, the transmission loss of the optical fiber in the state B does not include the microbend loss, and is considered to be a transmission loss inherent to the optical fiber itself.

This measuring method is similar to the fixed diameter drum method defined in JIS C6823:2010. This measuring method is also referred to as a sandpaper method. Further, in this measuring method, since the transmission loss is measured at a wavelength of 1550 nm, the following microbend loss is also a value at a wavelength of 1550 nm.

The effective core cross-sectional area (effective core cross-sectional area) is an index indicating the easiness of microbend loss of the optical fiber. The effective core cross-sectional area is represented by the following equation (2).

[Math 2]

$$(Effective\ core\ cross\ sectional\ area) = (\pi k/4) * (MFD)^2 \cdots \text{(equation 2)}$$

Here, the effective core cross-sectional area is a value at a wavelength of 1550 nm, MFD is a mode field diameter (um), and k is a constant. The effective core cross-sectional area represents an area of a portion through which light having a predetermined intensity passes in a cross-section orthogonal to the axis of the bare optical fiber 2. Generally, the larger the effective core cross-sectional area of the bare optical fiber 2, the weaker the optical confinement in the cross section of the bare optical fiber 2. That is, when the effective core cross-sectional area of the bare optical fiber 2 is large, light in the bare optical fiber 2 tends to leak by an external force applied to the bare optical fiber 2. Therefore, when the effective core cross-sectional area of the bare optical fiber 2 becomes large, microbend loss of the colored optical fiber 1 tends to occur.

Here, the colored optical fiber 1 according to the embodiment of the present invention includes a primary layer 3 capable of effectively buffering an external force applied to the colored optical fiber 1. Therefore, by sufficiently buffering the external force applied to the colored optical fiber 1 by the primary layer 3, the external force applied to the bare optical fiber 2 can be sufficiently reduced. Thus, even when the effective core cross-sectional area of the bare optical fiber 2 is large, the microbend loss of the optical fiber can be effectively suppressed.

Further, by increasing the effective core cross-sectional area of the bare optical fiber 2, the light intensity per unit area of the cross section of the bare optical fiber 2 can be reduced. Thus, the nonlinear optical effect caused by the light in the bare optical fiber 2 can be suppressed. Accordingly, the colored optical fiber 1 of Examples 1 to 9 and Comparative Examples 1 and 2 preferably have an effective core cross-sectional area larger than or equal to 100 $\mu m^2$ and smaller than or equal to 160 $\mu m^2$, for example, larger than or equal to 120 $\mu m^2$ and smaller than or equal to 160 $\mu m^2$. Thus, it is possible to obtain the colored optical fiber 1 capable of suppressing the nonlinear optical effect caused by the light in the bare optical fiber 2.

In Examples 1 and 2, a primary layer material having a saturated Young's modulus of 0.84 MPa was used. The primary layer material was ultraviolet-cured until Young's modulus of Examples 1 and 2 became 0.58 MPa and 0.54 MPa, respectively, and the ratio of the Young's modulus to the saturated Young's modulus was 68.7% and 63.9%. Young's modulus after the additional ultraviolet irradiation was 0.59 MPa and 0.54 MPa, and the ratio of the Young's modulus after additional ultraviolet irradiation to the saturated Young's modulus was 69.9% and 64.0%. The ratio of a change amount of Young's modulus to the saturated Young's modulus was 1.2% and 0.0%, and in any case, the ratio was smaller than or equal to 16%. The microbend loss before and after the additional irradiation with ultraviolet light was smaller than or equal to 0.15 dB/km, and the Evaluations 1 and 2 were good (OK).

In Examples 3, 4, and 5, a primary layer material having a saturated Young's modulus of 1.30 MPa was used. The primary layer material was ultraviolet-cured until Young's modulus of Examples 3, 4, and 5 became 0.39 MPa, 0.30 MPa, and 0.70 MPa, respectively, and the ratio of the Young's modulus to the saturated Young's modulus was 30.3%, 23.1%, and 53.8%. Young's modulus after the additional ultraviolet irradiation was 0.43 MPa, 0.33 MPa and 0.90 MPa, and the ratio of the Young's modulus after additional ultraviolet irradiation to the saturated Young's modulus was 32.7%, 25.4% and 69.2%. The ratio of a change amount of Young's modulus to the saturated Young's modulus was 3.1%, 2.3%, and 15.4%, and in any case, the ratio was smaller than or equal to 16%. The microbend loss before and after the additional irradiation with ultraviolet light was smaller than or equal to 0.15 dB/km, and the Evaluations 1 and 2 were good (OK).

In Examples 6 and 7, a primary layer material having a saturated Young's modulus of 1.74 MPa was used. The primary layer material was ultraviolet-cured until Young's modulus of Examples 6 and 7 became 1.11 MPa and 0.82 MPa, respectively, and the ratio of the Young's modulus to the saturated Young's modulus was 63.6% and 47.0%. Young's modulus after additional ultraviolet irradiation was 1.12 MPa and 0.89 MPa, and the ratio of the Young's modulus after additional ultraviolet irradiation to the saturated Young's modulus was 64.1% and 50.9%. The ratio of a change amount of Young's modulus to the saturated Young's modulus was 0.6% and 4.0%. The microbend loss before and after the additional irradiation with ultraviolet light was smaller than or equal to 0.15 dB/km, and the Evaluations 1 and 2 were good (OK).

In Examples 8 and 9, a primary layer material having a saturated Young's modulus of 2.60 MPa was used. The primary layer material was ultraviolet-cured until Young's modulus of Examples 8 and 9 became 0.90 MPa and 0.71 MPa, respectively, and the ratio of the Young's modulus to the saturated Young's modulus was 34.5% and 27.4%. Young's modulus after additional ultraviolet irradiation was 1.04 MPa and 1.00 MPa, and the ratio of the Young's modulus after additional ultraviolet irradiation to the saturated Young's modulus was 40.0% and 38.3%. The ratio of a change amount of Young's modulus to the saturated Young's modulus was 5.4% and 11.2%. The microbend loss before and after the additional irradiation with ultraviolet light was smaller than or equal to 0.15 dB/km, and the Evaluations 1 and 2 were good (OK).

In Comparative Example 1, a primary layer material having a saturated Young's modulus of 1.30 MPa was used, and the primary layer material was cured until Young's modulus became 0.19 MPa. The ratio of a change amount of Young's modulus to the saturated Young's modulus was 14.4%, which is smaller than 70%, whereas the ratio of Young's modulus after the additional ultraviolet irradiation to the saturated Young's modulus was 97.7%, which is larger than 70%. The ratio of a change amount of Young's modulus before and after the additional ultraviolet irradiation to the saturated Young's modulus was 83.1%. The microbend loss was 0.15 dB/km and Evaluation 1 was good (OK), whereas the microbend loss after the additional irradiation with ultraviolet light was larger than 0.15 dB/km and Evaluation 2 was poor (NG) .

In Comparative Example 2, a primary layer material having a saturated Young's modulus of 1.30 MPa was used, and the primary layer material was cured until Young's modulus became 0.95 MPa. The ratio of a change amount of Young's modulus to the saturated Young's modulus was 73.3%, larger than 70%. The ratio of the Young's modulus after additional ultraviolet irradiation to the saturated Young's modulus was 99.1%, larger than 70%. The ratio of a change amount of Young's modulus before and after the additional ultraviolet irradiation to the saturated Young's modulus was 26.2%. The microbend loss before and after the additional irradiation with ultraviolet light is larger than 0.15 dB/km, and the Evaluations 1 and 2 were both poor (NG).

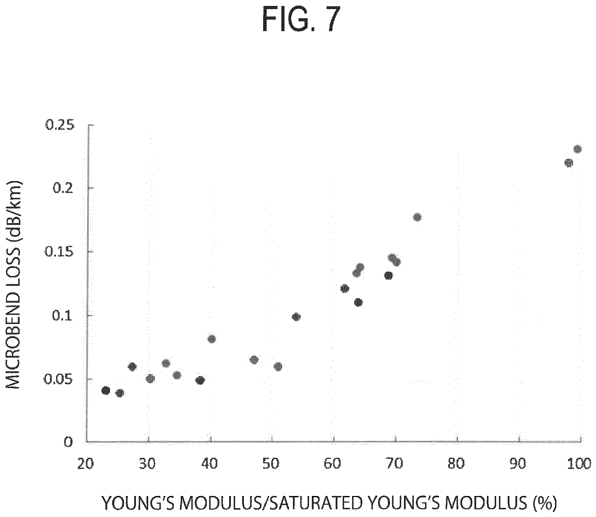

FIG. 7 is a diagram illustrating a relationship between the ratio (%) of Young's modulus to saturated Young's modulus and the ratio (%) of Young's modulus after additional ultraviolet irradiation to saturated Young's modulus and microbend loss (dB/km) in Examples 1 to 9 and Comparative Examples 1 and 2 in Table 1. As illustrated in FIG. 7, when the ratio of the Young's modulus to the saturated Young's modulus was smaller than 70%, it was confirmed that the microbend loss of the colored optical fiber 1 became smaller than or equal to 0.15 dB/km. Therefore, the ratio of the Young's modulus to the saturated Young's modulus is preferably smaller than 70%.

The saturated Young's modulus of the primary layer 3 preferably has a relatively large saturated Young's modulus larger than or equal to 0.84 MPa. Since the ultraviolet curing resin having a large saturated Young's modulus has a relatively low viscosity, handling is easy. For this reason, it is possible to obtain a manufacturing advantage, for example, that the uniform primary layer 3 can be easily formed.

Further, since the primary layer 3 is exposed to a high temperature in the drawing step, a curing reaction due to additional ultraviolet irradiation can be suppressed. In the present embodiment, by using the ultraviolet curing resin having a large saturated Young's modulus, even when the primary layer 3 is exposed to a high temperature in the drawing step, it is possible to prevent the Young's modulus from becoming too small.

Further, the ratio of the Young's modulus after the additional ultraviolet irradiation to the saturated Young's modulus is preferably smaller than 70%, and the ratio of the change amount of the Young's modulus before and after the additional ultraviolet irradiation to the saturated Young's modulus is preferably smaller than or equal to 16%. Thus, microbend loss due to curing of the primary layer 3 can be suppressed when additional ultraviolet light is irradiated to the manufactured colored optical fiber 1.

As described above, according to the present embodiment, it is possible to suppress microbend loss while avoiding problems associated with the ultraviolet curing resin having small saturated Young's modulus.

The present invention is not limited to the embodiments described above, and various modifications are possible. For example, an example in which a configuration of a part of any embodiment is added to another embodiment or an example in which a configuration of a part of another embodiment is substituted is also an embodiment of the present invention. In addition, a known technique or a known technique in the technical field can be appropriately applied to a specific description or a portion not illustrated in the embodiments.

This application is a Continuation of International Patent Application No. PCT/JP2021/039503, filed October 26, 2021, which claims the benefit of Japanese Patent Application No. 2020-181724, filed October 29, 2020, both of which are hereby incorporated by reference herein in their entirety.

[List of Reference Symbols]

1    colored optical fiber
2    bare optical fiber
3    primary layer
4    secondary layer
5    colored layer

**Claims**

1.    A colored optical fiber comprising:

a bare optical fiber;
a primary layer formed of an ultraviolet curing resin covering the bare optical fiber; and
a secondary layer formed of an ultraviolet curing resin covering the primary layer,

wherein a Young's modulus of the primary layer is smaller than 70% with respect to a saturated Young's modulus of the primary layer, and
wherein the saturated Young's modulus of the primary layer is larger than or equal to 0.84 MPa.

2. The colored optical fiber according to claim 1, wherein the Young's modulus of the primary layer is smaller than or equal to 1.12 MPa.

3. The colored optical fiber according to claim 1 or 2, wherein a Young's modulus after irradiating the primary layer with ultraviolet light is smaller than 70% with respect to the saturated Young's modulus of the primary layer.

4. The colored optical fiber according to any one of claims 1 to 3, wherein a change amount between a Young's modulus at the time of forming the primary layer and a Young's modulus after forming the primary layer is smaller than or equal to 16% with respect to the saturated Young's modulus of the primary layer.

5. An optical fiber ribbon comprising:

   a plurality of the colored optical fibers according to any one of claims 1 to 4; and
   an adhesive layer connecting the plurality of colored optical fibers.

6. An assembly cable of a single fibers comprising:

   the colored optical fiber according to any one of claims 1 to 4; and
   a sheath accommodating the colored optical fiber.

7. A ribbon cable comprising:

   the optical fiber ribbon according to claim 5 and;
   a sheath accommodating the optical fiber ribbon.

8. A method for manufacturing a colored optical fiber comprising:

   a step of drawing a bare optical fiber from an optical fiber base material;
   a step of forming a primary layer by applying an ultraviolet curing resin around the bare optical fiber; and
   a step of forming a secondary layer by applying an ultraviolet curing resin around the primary layer and irradiating the ultraviolet curing resin with ultraviolet light,
   after manufacturing the colored optical fiber,
   wherein a Young's modulus of the primary layer is smaller than 70% with respect to a saturated Young's modulus of the primary layer, and
   wherein the saturated Young's modulus of the primary layer is larger than or equal to 0.84 MPa.

9. The method for manufacturing a colored optical fiber according to claim 8, wherein in the step of forming the primary layer, the ultraviolet curing resin is irradiated with ultraviolet light.

10. The method for manufacturing a colored optical fiber according to claim 8 or 9 further comprising a step of forming a colored layer by applying an ultraviolet curing resin around the secondary layer and irradiating the ultraviolet curing resin with ultraviolet light.

11. The method for manufacturing a colored optical fiber according to claim 8 or 9, wherein the secondary layer is colored.

12. A method for manufacturing an optical fiber ribbon comprising:

   a step of preparing a plurality of the colored optical fibers according to any one of claims 8 to 11; and
   a step of connecting the plurality of colored optical fibers by applying an ultraviolet curing resin to the plurality of colored optical fibers and irradiating the ultraviolet curing resin with ultraviolet light.

FIG. 1

FIG. 2

# FIG. 3

START

INSTALL OPTICAL
FIBER BASE MATERIAL — S101

DRAW BARE OPTICAL FIBER — S102

FORMING PRIMARY LAYER — S103

FORMING SECONDARY LAYER — S104

FORMING COLORED LAYER — S105

END

# FIG. 4

# FIG. 5

# FIG. 6

START

INSTALL OPTICAL
FIBER BASE MATERIAL — S101

DRAW BARE OPTICAL FIBER — S102

FORMING PRIMARY LAYER — S103

FORMING SECONDARY LAYER — S104

FORMING COLORED LAYER — S105

FORMING RIBBON LAYER
OF COLORED OPTICAL FIBER — S106

END

# FIG. 7

## INTERNATIONAL SEARCH REPORT

| International application No. |
|---|
| **PCT/JP2021/039503** |

**A. CLASSIFICATION OF SUBJECT MATTER**

*C03C 25/1065*(2018.01)i; *C03C 25/285*(2018.01)i; *C03C 25/50*(2006.01)i; *C03C 25/6226*(2018.01)i; *G02B 6/02*(2006.01)i; *G02B 6/44*(2006.01)i
FI: G02B6/44 331; G02B6/44 371; G02B6/44 301B; G02B6/44 391; G02B6/02 356; C03C25/1065; C03C25/6226; C03C25/50; C03C25/285

According to International Patent Classification (IPC) or to both national classification and IPC

**B. FIELDS SEARCHED**

Minimum documentation searched (classification system followed by classification symbols)

G02B6/02-6/036; G02B6/10; G02B6/44; C03C25/00-25/70

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/062364 A1 (FUJIKURA LTD) 05 April 2018 (2018-04-05) paragraphs [0009]-[0043], fig. 1-2, table 1 | 1-11 |
| Y | | 12 |
| Y | WO 2018/062365 A1 (FUJIKURA LTD) 05 April 2018 (2018-04-05) paragraph [0019] | 12 |
| A | JP 4-042838 A (SUMITOMO ELECTRIC IND LTD) 13 February 1992 (1992-02-13) entire text, all drawings | 1-12 |
| A | JP 63-315542 A (SUMITOMO ELECTRIC IND LTD) 23 December 1988 (1988-12-23) entire text, all drawings | 1-12 |
| A | JP 62-202842 A (NIPPON TELEGR & TELEPH CORP <NTT>) 07 September 1987 (1987-09-07) entire text, all drawings | 1-12 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 December 2021** | **21 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2021/039503** |

**C.** DOCUMENTS CONSIDERED TO BE RELEVANT

| Category* | Citation of document, with indication, where appropriate, of the relevant passages | Relevant to claim No. |
| --- | --- | --- |
| A | JP 7-069686 A (DAINIPPON INK & CHEM INC) 14 March 1995 (1995-03-14) entire text, all drawings | 1-12 |
| A | US 5977202 A (DSM N.V.) 02 November 1999 (1999-11-02) entire text, all drawings | 1-12 |

Form PCT/ISA/210 (second sheet) (January 2015)

INTERNATIONAL SEARCH REPORT
Information on patent family members

International application No.

**PCT/JP2021/039503**

| Patent document cited in search report | | | Publication date (day/month/year) | Patent family member(s) | | | Publication date (day/month/year) |
|---|---|---|---|---|---|---|---|
| WO | 2018/062364 | A1 | 05 April 2018 | US | 2020/0026012 | A1 | |
| | | | | paragraphs [0011]-[0062], fig. 1-2, table 1 | | | |
| | | | | EP | 3521883 | A1 | |
| | | | | CN | 109643000 | A | |
| | | | | KR | 10-2019-0041007 | A | |
| WO | 2018/062365 | A1 | 05 April 2018 | US | 2020/0026013 | A1 | |
| | | | | paragraph [0029] | | | |
| | | | | EP | 3521884 | A1 | |
| | | | | KR | 10-2019-0043580 | A | |
| | | | | CN | 109716195 | A | |
| JP | 4-042838 | A | 13 February 1992 | (Family: none) | | | |
| JP | 63-315542 | A | 23 December 1988 | (Family: none) | | | |
| JP | 62-202842 | A | 07 September 1987 | (Family: none) | | | |
| JP | 7-069686 | A | 14 March 1995 | (Family: none) | | | |
| US | 5977202 | A | 02 November 1999 | WO | 1999/015473 | A1 | |
| | | | | EP | 1027300 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005162522 A
- JP 2002524581 A
- JP 2018062364 A
- JP 2018062365 A
- JP 2021039503 W
- JP 2020181724 A